# EUROPEAN PATENT APPLICATION

(11) **EP 3 693 580 A1**
(43) Date of publication of application: **12.08.2020**
(21) Application number: 20150776.1
(22) Date of filing: 08.01.2020
(51) Int. Cl.: F02C 7/277, F02C 7/32

(54) **GEARBOX ASSEMBLY**

(30) Priority: 05.02.2019 GB 201901549
(71) Applicant: Rolls-Royce plc, London N1 9FX (GB)
(72) Inventor: Allen, David, Derby, Derbyshire DE24 8BJ (GB)
(74) Representative: Rolls-Royce plc

(57) **Abstract**

A gearbox assembly comprising: a gearbox having a plurality of gears, an air turbine starter, and a transfer shaft. The transfer shaft has a first end portion engaged with a gear of the gearbox and an opposing second end portion configured for operative connection with a core shaft of the turbine engine. The air turbine starter is operatively engaged with the transfer shaft between the first and second end portions so as to be rotatable by the air turbine starter.

## Description

### Field of the Disclosure

The present disclosure relates to a gearbox assembly comprising the engine accessories of a gas turbine engine.

### Background of the Disclosure

Conventionally an accessory gearbox of an aircraft gas turbine engine is mounted to a fan case of the turbine engine, at a location beneath the engine.

The gearbox is connected to an engine core by a radial drive shaft (i.e. extending radially with respect to an axially extending core shaft of the engine core). In some arrangements, depending on the location of the accessory gearbox, a transfer gearbox may connect the radial drive shaft to an axially extending transfer shaft that may, in turn, be connected to the accessory gearbox.

The engine core provides power (from the engine core) to engine accessories mounted to the gearbox, such as an auxiliary generator and pumps for hydraulic fluid, fuel, oil etc. In addition to these accessories, a turbine starter may be mounted to the accessory gearbox. This turbine starter may be used to initiate movement of the core shaft via the gearbox and the various transmission components (e.g. transfer shaft, radial shaft, etc.) connecting the gearbox to the core shaft.

The accessory gearbox generally includes a gear train formed of spur gears. The turbine starter, and other engine accessories are mounted either side of this gear train and engage these gears so as to drive, or be driven by, the gears of the gear train. The gear train and engine accessories can take up a substantial amount of space on the outside of the fan case and can also be of a substantial combined weight.

Thus there is a need to reduce the size and or/weight of the engine accessory gearbox.

### Summary of the Disclosure

The present disclosure provides a gearbox assembly, a gas turbine engine, and an air turbine starter as set out in the appended claims.

In a first aspect there is provided a gearbox assembly for a gas turbine engine, the gearbox assembly comprising: a gearbox having a plurality of gears; an air turbine starter; and a transfer shaft having a first end portion engaged with a gear of the gearbox and an opposing second end portion configured for operative connection with a core shaft of the gas turbine engine, the air turbine starter operatively engaged with the transfer shaft between the first and second end portions so as to be rotatable by the air turbine starter.

Providing an air turbine starter that engages the transfer shaft between its ends may allow for a gearbox assembly that is more compact, lighter and/or of simpler construction than a gearbox assembly where the transfer shaft and air turbine starter are separately located (e.g. on separate sides of the gearbox). That is, the integration of the air turbine starter and the transfer shaft, may leave a space where the air turbine starter would otherwise be located. That space may then be taken by another of the turbine engine accessories mounted to the gearbox. This may reduce the length of the gear train (and consequently the housing) of the gearbox and may thus reduce the size and weight of the gearbox.

Part of this weight and/or size reduction may be a result of the removal of (now unnecessary) idler gears. For example, gearbox accessories can be configured to operate by way of receipt of a torque, in a particular direction. In some configurations the air turbine starter and a further engine accessory (e.g. variable frequency generator) are configured to operate by receipt of respective torques that have opposite directions (e.g. one clockwise and the other anti-clockwise). When this is the case, and the e.g. variable frequency generator and turbine starter are on the same side of the gear train, idler gears are required to reverse the direction of torque between them. By moving the air turbine starter to the other side of the gearbox, the air turbine starter and variable frequency generator can engage with the same gear of the gearbox. That is, because they are engaged either side of a rotating gear (so as to be rotated by 180 degrees relative to one another), one receives a clockwise torque, whilst the other receives an anti-clockwise torque. This means that idler gears are not required in order to alter the direction of torque imparted on the variable frequency generator, which provides weight and space savings.

The term operative connection is used to describe an arrangement in which movement of the second end portion is transferred to the core shaft of the turbine engine directly or indirectly (i.e. by way of intermediate components between the second end portion and the core shaft). For example, the second end portion may be engaged with e.g. a radial shaft or transfer gearbox, which in turn may be connected (directly or indirectly) to the core shaft such that rotation of the second end portion causes rotation of the core shaft.

Optional features of the present disclosure will now be set out. These are applicable singly or in any combination with any aspect of the present disclosure.

A rotational axis of the air turbine starter may be the same as or parallel to a rotational axis of the transfer shaft. The term parallel here is used to describe a relationship where the rotational axes are side by side (and having the same distance continuously between them).

The transfer shaft may extend from the first end portion to the second end portion through the turbine starter so as to be rotatable by the air turbine starter. The air turbine starter may comprise an elongate cavity extending therethrough for receipt of the transfer shaft. In this respect, the transfer shaft may form part of the air turbine starter (or may be a separate component to the air turbine starter).

Alternatively, the transfer shaft may be laterally offset from the air turbine starter. The air turbine starter may operatively engage the transfer shaft via an offset shaft. The offset shaft may extend laterally between the air turbine starter and the transfer shaft. For example, the air turbine starter may comprise an output shaft and the offset shaft may engage with the output shaft so as to be rotatable by the output shaft. This rotation may be transferred to the transfer shaft by the offset shaft.

The transfer shaft may be unitary. Alternatively, the transfer shaft may comprise a plurality of elements that are coupled to one another. For example, the transfer shaft may comprise a plurality of (e.g. coaxial) shafts that are coupled to one another (e.g. in an end-to-end arrangement).

The first end portion of the transfer shaft may comprise a spline arrangement for engagement with a corresponding spline arrangement of a gear of the gearbox. The first end portion may alternatively comprise other means for engagement with the gears of the gearbox. For example, the first end portion may comprise a spur gear, or a coupling/interlocking arrangement for e.g. direct engagement with a gear of the gearbox.

The second end portion of the transfer shaft may extend beyond the air turbine starter. The second end portion of the shaft may comprise radially extending teeth for engagement with a further component of the turbine engine (e.g. a gear of a transfer gearbox or a radial shaft).

The radially extending teeth may be arranged so as to form a bevel gear. The second end portion may have another engagement means (e.g. a spline arrangement).

In some embodiments, the gears of the gearbox may form a gear train. The gear train may extend laterally with respect to a rotational axis of the transfer shaft. The gears may be in the form of spur gears. The spur gears may be substantially arranged so as to have axes of rotation that are substantially parallel to the rotational axis of the transfer shaft. The gears may each rotate about a respective integral shaft.

The gearbox may comprise a housing enclosing (or at least partially enclosing) the gear train. The housing may have first and second laterally extending sides spaced either side of the gear train. The housing may follow a curve in the lateral direction. The curve of the housing may generally follow an outer circumferential surface of the turbine engine casing. The gear train of the gearbox may similarly be curved in the lateral direction.

The housing may have a plurality of mounting portions for mounting engine accessories to the housing. The mounting portions may be on the first and second sides of the housing. The mounting portions may comprise, for example, a locking arrangement, bolt holes, etc.

The air turbine starter may be mounted to a first side of the housing and a further engine accessory may be mounted to the second side of the housing (i.e. and engaged with respective gears of the gear train). The further engine accessory may be a variable frequency generator. The variable frequency generator may be positioned so as to be substantially aligned with the turbine rotor along the rotational axis of the shaft. That is, the variable frequency generator may be located directly opposite (or substantially directly opposite) the air turbine starter.

Additional engine accessories may be mounted to the gearbox (and may engage with the gear train). These additional engine accessories may comprise a permanent magnet generator (PMG). The PMG may be located on the first side of the gearbox. The PMG may be engaged with a gear (i.e. the PMG gear) of the gear train that is spaced from the gear (i.e. the transfer shaft gear) of the gear train to which the transfer shaft is engaged. For example, one or more idler gears may be interposed between the PMG gear and the transfer shaft gear. When the PMG gear and transfer shaft gear are spaced by a single idler gear, the PMG gear and transfer shaft gear may rotate in the same direction.

A permanent magnet alternator (PMA) may further be mounted to the gearbox (and engaged with the gear train). The PMA may be located on the second side of the gearbox. The PMA may engage a gear (i.e. the PMA gear) of the gear train that is spaced from the transfer shaft gear of the gear train. For example, one or more idler gears may be interposed between the transfer shaft gear and the PMA gear. A single idler gear may be interposed between the transfer shaft gear and the PMA gear. The PMA may have substantially the same lateral position as the PMG. That is, the PMA may be located substantially directly opposite the PMG.

A fuel pump may additionally be mounted to the gearbox (and engaged with the gear train). The fuel pump may be located on the first side of the gearbox. The fuel pump may be substantially adjacent to the air turbine starter. Thus, the fuel pump may engage a gear (i.e. the fuel pump gear) of the gear train that is adjacent to (and meshingly engaged with) the transfer shaft gear of the gear train. Thus, the fuel pump gear of the gear train may rotate in the opposite direction to the transfer shaft gear of the gear train.

A hydraulic pump may further be mounted to the gearbox (and engaged with the gear train). The hydraulic pump may be located on the second side of the gearbox. The hydraulic pump may be laterally spaced from the variable frequency generator. The hydraulic pump may be engaged with a gear (i.e. the hydraulic pump gear) that is directly engaged with the fuel pump gear of the gear train. Thus, the hydraulic pump gear may rotate in the opposite direction to the fuel pump gear. The hydraulic pump may be spaced further away, in the lateral direction, from the air turbine starter than the fuel pump.

The air turbine starter may comprise a housing. The housing may comprise an opening at a first end to allow the transfer shaft to pass therethrough. The housing may additionally comprise an opening at a second end to allow the transfer shaft to pass therethrough. The openings of the housing may be aligned. An elongate cavity may extend through the air turbine starter between the openings (i.e. for the receipt of the transfer shaft). The cavity may have a generally cylindrical shape. The first end of the housing may comprise a mounting portion for mounting the air turbine starter to the gearbox.

In some embodiments the air turbine starter may comprise an air inlet. The air turbine starter may comprise an air outlet in fluid communication with the air inlet. The air turbine starter may comprise a turbine rotor in fluid communication with the air inlet and/or air outlet. Thus an airflow into the air inlet may rotate the turbine rotor.

The air inlet may at least partially extend about the transfer shaft. In this respect, the air inlet may be substantially annular. In other embodiments, the air inlet may be oriented such that the direction of air entering the air inlet is generally normal to the axis of rotation of the transfer shaft. The air inlet may be arranged such that air entering the inlet is generally tangential to the turbine rotor. The air inlet may be configured for coupling with an air source (e.g. an external air source), or a duct for airflow from an air source (e.g. an external air source).

The air turbine starter may comprise a clutch. The clutch may selectively engage or disengage the air turbine starter from the transfer shaft. Thus, the clutch may be configurable between an engaged position and a disengaged position. For example, in the disengaged position, the turbine rotor may be operatively disconnected from transfer shaft. In the engaged position, the turbine rotor may be operatively connected to the transfer shaft. The clutch may enter the disengaged configuration when the rotational speed of the transfer shaft exceeds a rotational speed of the turbine rotor (or a rotational speed of the end of a gear arrangement connected to the turbine rotor).

The air turbine starter may further comprise a gear arrangement (e.g. a gear train), which may be interposed (and connected) between the turbine rotor and the transfer shaft (e.g. between the turbine rotor and the clutch). The gear arrangement may be configured such that the rotational speed of the turbine rotor is different to the rotational speed of transfer shaft.

In a second aspect there is disclosed a gas turbine engine comprising: an engine core comprising a turbine, a compressor, and a core shaft connecting the turbine to the compressor, a gearbox assembly as described with respect to the first aspect; and an engine take-off assembly arranged for transmitting rotational movement between the core shaft and the gearbox assembly.

The engine take-off assembly may comprise a radial shaft extending radially from the core shaft of the turbine engine (e.g. substantially radially with respect to a rotational axis of the core shaft). The radial shaft may be engaged with the second end portion of the transfer shaft. The radial shaft may be engaged with the second end portion of the transfer shaft via one or more gears (e.g. forming part of a transfer gearbox). The transfer shaft may extend generally parallel to the rotational axis of the core shaft.

The gas turbine engine may further comprise a casing surrounding the engine core. The gearbox and engine accessories may be mounted to the casing. The gearbox and engine accessories may be mounted to an external surface of the core casing. The gearbox and engine accessories may be mounted vertically beneath the core casings.

The gear train of the gearbox may be arranged so as to extend perpendicularly to the rotation axis of the core shaft of the engine.

The gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a power gearbox (i.e. in addition to the engine accessory gearbox discussed above) that receives an input from the core shaft and outputs drive to the fan so as to drive the fan at a lower rotational speed than the core shaft. The input to the power gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, or 3.2 to 3.8, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. Purely by way of example, the gearbox may be a "star" gearbox having a ratio in the range of from 3.1 or 3.2 to 3.8. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 220 cm, 230 cm, 240 cm 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350 cm, 360 cm (around 140 inches), 370 cm (around 145 inches), 380 (around 150 inches) cm, 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 240 cm to 280 cm or 330 cm to 380 cm.

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 220 cm to 300 cm (for example 240 cm to 280 cm or 250 cm to 270 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 330 cm to 380 cm may be in the range of from 1200 rpm to 2000 rpm, for example in the range of from 1300 rpm to 1800 rpm, for example in the range of from 1400 rpm to 1800 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds), for example in the range from 0.28 to 0.31 or 0.29 to 0.3.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds), for example in the range of from 13 to 16, or 13 to 15, or 13 to 14. The bypass duct may be substantially annular. The bypass duct may be radially outside the engine core. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds), for example in the range from 50 to 70.

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds), for example in the range from 80 NKg⁻¹s to 100 NKg⁻¹s, or 85 NKg⁻¹s. to 95 NKg⁻¹s. Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160 kN, 170 kN, 180 kN, 190 kN, 200 kN, 250 kN, 300 kN, 350 kN, 400 kN, 450 kN, 500 kN, or 550 kN. The maximum thrust may be in an inclusive range bounded by any two of the values in the previous sentence (i.e. the values may form upper or lower bounds). Purely by way of example, a gas turbine as described and/or claimed herein may be capable of producing a maximum thrust in the range of from 330 kN to 420 kN, for example 350 kN to 400 kN. The thrust referred to above may be the maximum net thrust at standard atmospheric conditions at sea level plus 15 degrees C (ambient pressure 101.3 kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400 K, 1450 K, 1500 K, 1550 K, 1600 K or 1650 K. The TET at cruise may be in an inclusive range bounded by any two of the values in the previous sentence (i.e. the values may form upper or lower bounds). The maximum TET in use of the engine may be, for example, at least (or on the order of) any of the following: 1700 K, 1750 K, 1800 K, 1850 K, 1900 K, 1950 K or 2000 K. The maximum TET may be in an inclusive range bounded by any two of the values in the previous sentence (i.e. the values may form upper or lower bounds), for example in the range from 1800 K to 1950 K. The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24, or or 26 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000 m to 15000 m, for example in the range of from 10000 m to 12000 m, for example in the range of from 10400 m to 11600 m (around 38000 ft), for example in the range of from 10500 m to 11500 m, for example in the range of from 10600 m to 11400 m, for example in the range of from 10700 m (around 35000 ft) to 11300 m, for example in the range of from 10800 m to 11200 m, for example in the range of from 10900 m to 11100 m, for example on the order of 11000 m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 degrees C.. Purely by way of further example, the cruise conditions may correspond to: a forward Mach number of 0.85; a pressure of 24000 Pa; and a temperature of -54 degrees C (which may be standard atmospheric conditions at 35000 ft).

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

In a third aspect there is provided an air turbine starter for a gas turbine engine. The air turbine starter comprises an air inlet; a transmission assembly extending through the air turbine starter between a first end configured for operative connection with a gearbox of the turbine engine and a second end portion for operative connection with a core shaft of the turbine engine; and a turbine rotor in fluid communication with the air inlet and operatively connected to the transmission assembly for rotation of the transmission assembly.

The transmission assembly may comprise a shaft extending (fully or partway) through the air turbine starter. The transmission assembly may comprise a plurality of shafts coupled to one another. The shafts may be coaxial. The shafts may be coupled in an end-to-end arrangement. For example, the shafts may be engaged to one another by way of a spline connection. The shaft(s) may extend fully through the air turbine starter so as to extend beyond ends of the turbine starter.

The turbine rotor may be connected the transmission assembly (e.g. the shaft or shafts) by way of a spline connection. The air turbine starter may comprise a clutch and the turbine rotor may engage the transmission assembly via the clutch. The clutch may selectively engage and disengage the turbine rotor from the transmission assembly.

The air inlet may be annular. The air inlet may at least partially surround the first or second end portion.

The air turbine starter may be as otherwise described above with respect to the first aspect. The transmission assembly (and first and second end portions) may be in the form of the transfer shaft as described with respect to the first aspect. For example, the first and/or second end portion may comprise radially extending teeth, a spline arrangement, etc.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief Description of Drawings

Embodiments will now be described by way of example only, with reference to the figures, in which:
- **Figure 1**: is a sectional side view of a gas turbine engine;
- **Figure 2**: is a close up sectional side view of an upstream portion of a gas turbine engine;
- **Figure 3**: is a partially cut-away view of a gearbox for a gas turbine engine;
- **Figure 4**: is a schematic of a gearbox assembly;
- **Figure 5A**: is a schematic of an air turbine starter arrangement; and
- **Figure 5B**: is a schematic of a variation of the air turbine starter arrangement of figure 5A.

### Detailed Description

Aspects and embodiments of the present disclosure will now be discussed with reference to the accompanying figures. Further aspects and embodiments will be apparent to those skilled in the art.

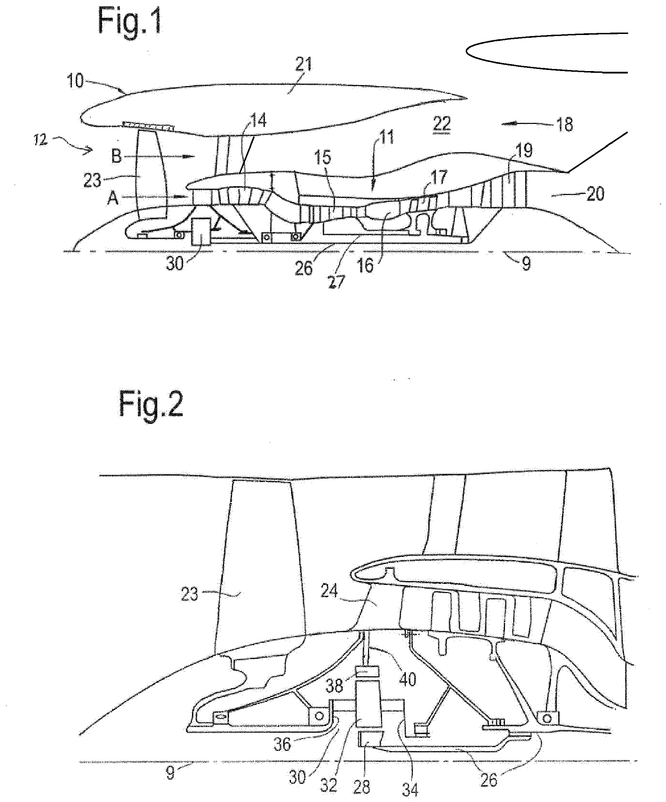

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in **Figure 2****.** The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

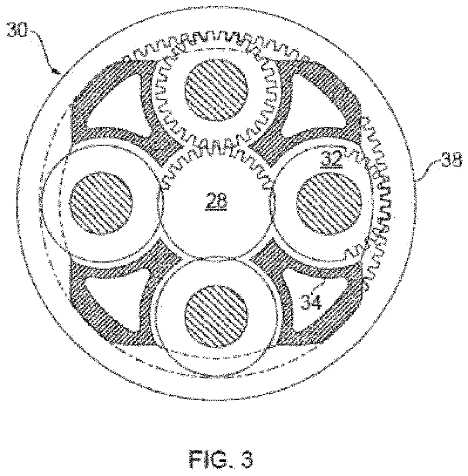

The epicyclic gearbox 30 is shown by way of example in greater detail in **Figure 3****.** Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the power gearbox 30 in the engine 10 and/or for connecting the power gearbox 30 to the engine 10. By way of further example, the connections (such as the linkages 36, 40 in the Figure 2 example) between the power gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the power gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

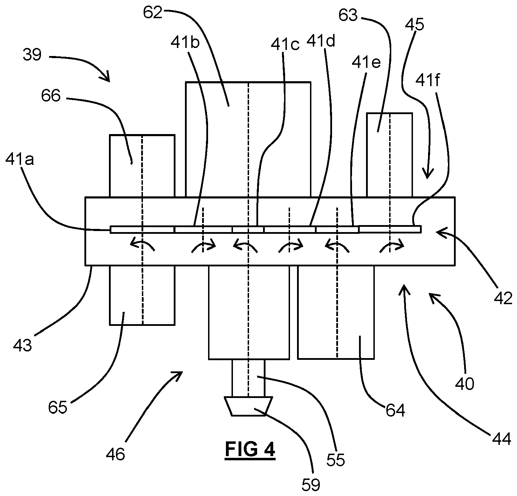

**Figure 4** illustrates a gearbox assembly for a gas turbine engine such as that shown in Figures 1 to 3. The gearbox assembly 39 comprises an accessory gearbox 40 having a plurality of spur gears 41a, 41b, 41c, 41d, 41e, 41f arranged in a gear train 42 that extends in a generally linear manner within a housing 43 of the gearbox 40. In this respect, the gearbox housing 43 has first 44 and second 45 sides that extend either side of the gear train 42. A plurality of engine accessories is engaged with the gear train 42 of the gearbox 40, one of which is an air turbine starter 46.

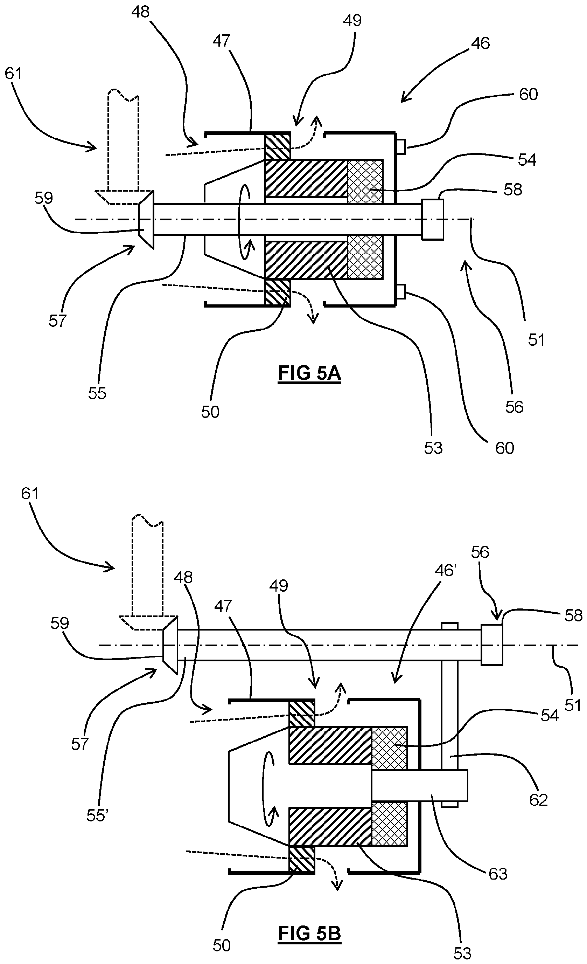

This air turbine starter 46 is shown in more detail in **Figure 5A****.** The air turbine starter 46 comprises a housing 47 defining an air inlet 48 and an air outlet 49, and a turbine rotor 50 in fluid communication with the air inlet 48 and air outlet 49. As may be apparent from the schematic, in operation air (e.g. pressurised air) flows into the air inlet 48 (e.g. supplied by an external air source) and across blades of the turbine rotor 50 so as to cause the turbine rotor 50 to rotate about a turbine axis 51. Although not apparent from the schematic, the air inlet 48 and air outlet 49 may each comprise e.g. a mesh grille that prevents unwanted objects (i.e. that could cause damage to the turbine rotor 50) from entering the air turbine starter 46.

A transfer shaft 55 is shown extending through the air turbine starter 46. The transfer shaft 55 is connected to the turbine rotor 50 by way of a gear arrangement 53 and a clutch 54.

The gear arrangement 53 operatively connects the turbine rotor 50 to the clutch 54. In particular, the gear arrangement 53 is configured as a reduction gear train such that an end of the gear arrangement 53 that is engaged with the clutch 54 rotates at a lower speed than an end of the gear arrangement 53 that is engaged with the turbine rotor 50. In other words, the gear arrangement 53 is configured to increase torque.

The clutch 54 is configurable between an engaged position and a disengaged position. In the disengaged position, the turbine rotor 50 is operatively disconnected from the transfer shaft 55 by the clutch 54. In this way, rotation of the turbine rotor 50 has no effect on the transfer shaft 55 (and vice versa). In the engaged position, the clutch 54 operatively connects the turbine rotor 50 to the transfer shaft 55. Thus, when engaged, the clutch 54 transmits rotational movement of the turbine rotor 50 to the transfer shaft 55. In particular, the clutch 54 is configured to move from the engaged position to the disengaged position when the rotational speed of the transfer shaft 55 exceeds the rotational speed of the end of the gear arrangement 53 that is engaged with the clutch 54.

As will be explained further below, this may occur when the air turbine starter 46 is connected to an engine core of a turbine engine by the transfer shaft 55 (and other transmission components of the turbine engine) and is used to provide initial rotation of a core shaft of the engine core. During the start-up phase, the end of the gear arrangement 53 connected to the clutch 54 may rotate (due to rotation of the turbine rotor 50) at a greater speed than the transfer shaft 55. However, once the engine core has been fully started, such that it is rotating under its own power, the transfer shaft 55 may rotate at a faster speed than the end of the gear arrangement 53 that is engaged with the clutch 52 (i.e. due to the transfer shaft 55 being rotated by the engine core). When this occurs, the clutch 54 disengages the gear arrangement 54 (and thus the turbine rotor 50) from the transfer shaft 55.

The transfer shaft 55 extends through the air turbine starter 46 such that opposing first 56 and second 57 end portions of the transfer shaft 55 project beyond the housing 47. As should be appreciated from the figure, the clutch 54 is engaged with the transfer shaft 55 at a location that is between these first 56 and second 57 end portions.

The first end portion 56 of the shaft 55 comprises a spline arrangement 58. This spline arrangement 58 allows the first end portion 56 of the shaft 55 to engage with the gear train 42 of the gearbox 40 (i.e. via a spline connection with a gear of the gearbox). To further facilitate this engagement, the housing 47 of the air turbine starter 46 comprises mounting portions 60 for mounting the air turbine starter 46 to the housing 43 of the gearbox 40. These may, for example, be in the form of holes for mounting the housing 43 by way of a bolt and nut arrangement.

The second end portion 57 of the transfer shaft 55 comprises a plurality of radially projecting teeth, arranged so as to form a bevel gear 59. The bevel gear 59 allows engagement of the second end portion 57 of the transfer shaft 55 with a further shaft 61 (i.e. having a corresponding bevel gear). The further shaft 61 may, for example, be a radial shaft of a turbine engine for transmitting rotational movement between the engine core and the air turbine starter 46.

**Figure 5B** shows a variation of the arrangement of Figure 5A. Because this arrangement is similar to that shown in Figure 5A, similar numbering has been used. In Figure 5B, the transfer shaft 55' does not pass through the air turbine starter 46'. Rather, the transfer shaft 55' is laterally offset from the air turbine starter 46' (i.e. the rotational axes of the air turbine starter 46' and transfer shaft 55' are laterally offset, but remain parallel). Thus, the air turbine starter 46' engages the transfer shaft 55' via an offset shaft 62 that extends laterally between the transfer shaft 55' (between the first 56 and second 57 end portions of the transfer shaft) and an output shaft 62 of the air turbine starter 46'. The offset shaft 62 may engage the output shaft 62 and transfer shaft 55' by way of e.g. a meshing engagement, gearing arrangement, splined connection, etc.

Returning now to Figure 4, the turbine air starter 46 is mounted to the first side 44 of the housing 43 of the gearbox 40 (i.e. by way of the mounting portions 60) and the first end portion 56 of the transfer shaft 55 is engaged with the gear train 42 of the gearbox 40. In the illustrated embodiment (although not shown) the first end portion 56 of the transfer shaft 55 is coupled to a gear 41c of the gear train 42, but in other embodiments the first end portion 56 of the transfer shaft 55 may form part of the gear train 42 (i.e. the first end portion 56 may be a gear in the gear train 42)..

The transfer shaft 55 operatively connects the engine core to the gearbox 40 and the air turbine starter 46 provide initial movement to the engine core by engagement with the transfer shaft 55 between the first 56 and second 57 end portions. In known configurations the turbine starter would instead be mounted to the gearbox at another location. For example, it is known to position a turbine starter directly opposite the transfer shaft (i.e. on the opposing side of the gearbox). In the currently described embodiment, because the turbine starter 46 is integrated with the transfer shaft 55, a space is created where the air turbine starter 46 would otherwise be located.

In the present embodiment, that space is filled by a variable frequency generator 62. The variable frequency generator 62 is located on the second side 45 of the gearbox 40 and is generally aligned with the rotational axis 51 of the transfer shaft 55. The variable frequency generator 62 and the transfer shaft 55 are coupled to (or engaged with) the same gear 41c of the gear train 42.

In addition to the air turbine starter 46 and variable frequency generator 62, the plurality of engine accessories of the gearbox assembly 39 includes a hydraulic pump 63, fuel pump 64, permanent magnet generator (PMG) 65 and permanent magnet alternator (PMA) 66. Each of these engine accessories is powered by torque supplied by the engine core, which is provided via the gear train 42 of the gearbox 40 and the transfer shaft 55.

The fuel pump 64 is located on the same side of the gearbox housing 43 as the air turbine starter 46 (i.e. the first side 44). In particular, the fuel pump 64 is adjacent the air turbine starter 46 and is engaged with a gear 41d of the gear train 42 that is adjacent the gear 41c with which the air turbine starter 46 (via the transfer shaft 55) is engaged. Thus, the rotary component of the fuel pump 64 (e.g. an impeller) rotates in an opposite direction to the shaft 55 of the air turbine starter 46.

The PMG 65 is also located on the first side 44 of the gearbox 40, and on the opposite side of the air turbine starter 46 to the fuel pump 64. The PMG 65 is engaged with a gear 41a that is spaced from the gear 41c with which the air turbine starter 46 is engaged by an idler gear 41b. Thus, the rotor of the PMG 65 rotates in the same direction as the shaft 55 of the air turbine starter 46. The PMA 66 is mounted to the gearbox 40 directly opposite the PMG 65, on the second side 45 of the gearbox 40, and is engaged with the same gear 41a of the gear train 42 as the PMG 65.

The hydraulic pump 63 is also mounted on the second side 45 of the gearbox 40 (on the opposite side of the variable frequency unit 62 to the PMA 66). The hydraulic pump 63 is engaged with a gear 41f of the gear train 42 that is adjacent to a gear 41e with which the fuel pump 64 is engaged. Thus the gear 41f with which the hydraulic pump 63 is engaged rotates in a different direction to the gear 41e with which the fuel pump 64 is engaged.

It will be understood that the invention is not limited to the embodiments above-described and various modifications and improvements can be made without departing from the concepts described herein within the scope of the following claims. Except where mutually exclusive, any of the features may be employed separately or in combination with any other features and the disclosure extends to and includes all combinations and sub-combinations of one or more features described herein.

## Claims

1. A gearbox assembly for a gas turbine engine, the gearbox assembly comprising:
a gearbox having a plurality of gears;
an air turbine starter; and
a transfer shaft having a first end portion engaged with a gear of the gearbox and an opposing second end portion configured for operative connection with a core shaft of the gas turbine engine, the air turbine starter operatively engaged with the transfer shaft between the first and second end portions so as to be rotatable by the air turbine starter.

2. The gearbox assembly according to claim 1 wherein a rotational axis of the air turbine starter is the same as or parallel to a rotational axis of the transfer shaft.

3. The gearbox assembly according to claim 1 or 2 wherein the transfer shaft extends from the first end to the second end through the air turbine starter.

4. The gearbox according to any one of the preceding claims wherein the air turbine starter comprises an elongate cavity extending therethrough for receipt of the transfer shaft.

5. The gearbox assembly according to claim 1 wherein the transfer shaft is laterally offset from the air turbine starter, and the air turbine starter operatively engages the transfer shaft via an offset shaft extending laterally between the air turbine starter and the transfer shaft.

6. The gearbox assembly according to any one of the preceding claims wherein gears of the gearbox form a gear train extending laterally with respect to a rotational axis of the transfer shaft.

7. The gearbox assembly according to claim 6 wherein the gearbox comprises a housing enclosing the gear train, the housing having first and second laterally extending sides spaced either side of the gear train.

8. The gearbox assembly according to claim 7 wherein the first and second sides of the housing comprise a plurality of mounting portions for mounting engine accessories to the housing.

9. The gearbox assembly according to claim 7 or 8 wherein the air turbine starter is mounted to the first side of the housing, and a further engine accessory is mounted to the second side of the housing.

10. The gearbox assembly according to claim 9 wherein the further engine accessory is a variable frequency generator.

11. The gearbox assembly according to any one of the preceding claims wherein the air turbine starter comprises clutch to selectively engage and disengage the air turbine starter from the transfer shaft.

12. A gas turbine engine comprising:
an engine core comprising a turbine, a compressor, and a core shaft connecting the turbine to the compressor;
a gearbox assembly according to any one of the preceding claims; and
an engine take-off assembly arranged for transmitting rotational movement between the core shaft and the gearbox assembly.

13. The gas turbine engine according to claim 12 wherein the engine take-off assembly comprises a radial shaft extending radially from the core shaft.

14. An air turbine starter for a gas turbine engine, the air turbine starter comprising:
an air inlet;
a transmission assembly extending through the air turbine starter between a first end configured for operative connection with a gearbox of the turbine engine and a second end portion for operative connection with a core shaft of the turbine engine; and
a turbine rotor in fluid communication with the air inlet and operatively connected to the transmission assembly for rotation of the transmission assembly.

15. The air turbine starter according to claim 14 wherein the transmission assembly comprises a shaft, or a plurality of coupled shafts, extending through the air turbine starter.
